# EUROPEAN PATENT SPECIFICATION

(11) **EP 4 005 823 B1**
(45) Date of publication and mention of the grant of the patent: **04.10.2023**
(21) Application number: 22152374.9
(22) Date of filing: 05.01.2021
(51) Int. Cl.: B60C 9/06, B60C 11/24

(54) **BIAS TYRE FOR TWO-WHEEL VEHICLE**
DIAGONALREIFEN FÜR ZWEIRADFAHRZEUGE
PNEU À CARCASSE DIAGONALE POUR VÉHICULE À DEUX ROUES

(30) Priority: 19.02.2020 JP 2020026433; 19.02.2020 JP 2020026432
(43) Date of publication of application: 01.06.2022
(62) Divisional of application: 21150269.5
(73) Proprietor: Sumitomo Rubber Industries, Ltd., Kobe-shi, Hyogo-ken 651-0072 (JP)
(72) Inventor: ICHIRYU, Yutaka, Kobe-shi, 651-0072 (JP)
(74) Representative: Manitz Finsterwald Patent- und Rechtsanwaltspartnerschaft mbB

(56) References cited:
- EP-A2- 2 722 196
- JP-A- S6 094 804
- JP-A- 2002 337 512
- JP-A- 2003 276 404
- JP-A- 2014 156 209
- US-A1- 2008 149 248

## Description

### Technical Field

The present invention relates to a bias tyre for two-wheel vehicle including a carcass having a bias structure.

### Background Art

Conventionally, bias tyres for two-wheel vehicle including a bias carcass structure are known. For example, JP 2000-185511 A discloses a bias tyre for motorcycle that achieves both weight reduction and steering stability by specifying an inclination angle of the carcass line.

EP 2 722 196 A2 discloses a motorcycle tire having a hybrid construction with different rubber compound zones. JP 2002-337512 A discloses a tire for motorcycles having a wing rubber that forms a buttress surface and connects to a tread part of the tire. Other tires are known, for example, from JP S60-94804 A, US 2008/0149248 A1, JP 2003-276404 A, and JP 2014-156209 A.

### Summary of Invention

### Technical Problem

However, the bias tyre for motorcycle disclosed in JP 2000-185511 A has room for further improvement in steering stability during turning because the tyre employs a single rubber component that extends between sidewall portions through the tread portion.

The present invention has been made in view of the above circumstances and has a major object to provide a bias tyre for two-wheel vehicle capable of improving steering stability during turning.

The problem is solved by a bias tyre having the features of claim 1. Preferred embodiments are defined in the dependent claims.

### Advantageous Effects of Invention

In the bias tyre for two-wheel vehicle, the tread rubber is connected to the sidewall rubber portions to form the boundary surfaces, and the outermost ends in the tyre axial direction of the boundary surfaces are located on an outer surface of the tyre and inwardly in the tyre radial direction of the respective tread edges. Such a bias tyre for two-wheel vehicle using the tread rubber and the sidewall rubber portions, can improve steering stability during turning.

### Brief Description of the Drawings

FIG. 1 is a tyre meridian cross-sectional view of a bias tyre for two-wheel vehicle not covered by the present invention;
FIG. 2 is a tyre meridian cross-sectional view of a bias tyre for two-wheel vehicle not covered by the present invention;
FIG. 3 is a tyre meridian cross-sectional view of a bias tyre for two-wheel vehicle according to an embodiment of the invention; and
FIG. 4 is a development view of a tread portion of the embodiment of the invention.

### Description of the Preferred Embodiment

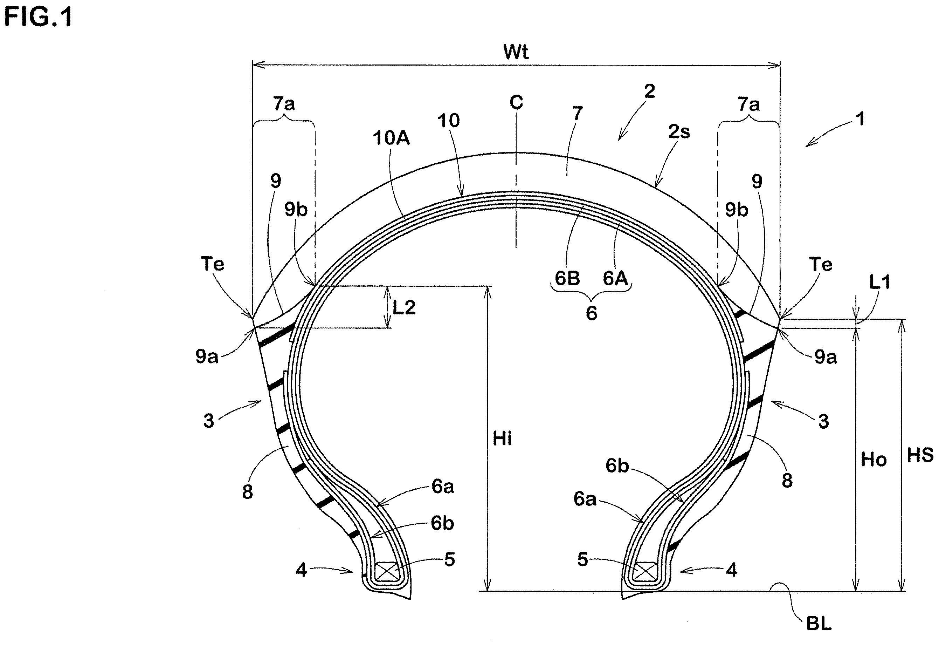

Embodiments will be explained below with reference to the accompanying drawings. FIG. 1 is a tyre meridian cross-sectional view of a bias tyre 1 for two-wheel vehicle (hereinafter, simply referred to as "tyre 1") not covered by the present invention under a normal state according to the first embodiment.

As used herein, the "normal state" is such that the tyre 1 is mounted on a standard wheel rim with a standard pressure but loaded with no tyre load. As used herein, unless otherwise noted, dimensions of portions of the tyre 1 are values measured under the normal state.

Further, as used herein, the "standard wheel rim" is a wheel rim officially approved for each tyre 1 by standards organizations on which the tyre is based, wherein the standard wheel rim is the "standard rim" specified in JATMA, the "Design Rim" in TRA, and the "Measuring Rim" in ETRTO, for example.

Furthermore, as used herein, the "standard pressure" is a standard pressure officially approved for each tyre 1 by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tyre 1 includes a tread portion 2, a pair of sidewall portions 3 extending inwardly in the tyre radial direction from both ends of the tread portion 2, and a pair of bead portions 4 provided inwardly in the tyre radial direction of the pair of sidewall portions 3. A pair of bead cores 5 is disposed in the pair of bead portions 4, for example.

The tread surface 2s which is an outer surface of the tread portion 2, for example, extends between tread edges Te through the tyre equator C in an arc shape that is convex outwardly in the tyre radial direction. Preferably, the tread width Wt which is a length in the tyre axial direction between the tread edges Te corresponds to the tyre maximum width.

Such a tyre 1 can turn with large camber angles. As used herein, the tread edges Te are outermost edges of the tread portion 2 in the tyre axial direction, and the tyre equator C is the center location between the tread edges Te in the tyre axial direction.

The tyre 1 further includes a carcass 6 having a bias structure that extends between the bead cores 5 of the bead portions 4 through the tread portion 2 and the sidewall portions 3. The carcass 6 includes a main portion 6a extending between the pair of bead cores 5, and a pair of turn-up portions 6b each turned up around a respective one of the pair of bead cores 5.

The carcass 6 having a bias structure includes at least one carcass ply. The carcass 6 includes two carcass plies 6A and 6B. The carcass plies 6A and 6B, for example, include carcass cords that are oriented at an angle of from 30 to 60 degrees with respect to the tyre equator C. Preferably, the carcass plies 6A and 6B are superimposed such that the carcass cords cross with one another between the plies 6A and 6B.

The tyre 1 further includes a tread rubber 7 forming the tread portion 2, and a pair of the sidewall rubber portions 8 forming the pair of sidewall portions 3. The tread rubber 7 is connected to the sidewall rubber portions 8 to form boundary surfaces 9. That is, the tread rubber 7 and the sidewall rubber portions 8 are made of different rubbers with one another. Outer end portions 7a in the tyre axial direction of the tread rubber 7 are connected to the sidewall rubber portions 8 via the boundary surfaces 9.

In such a tyre 1, a rubber that has superior grip performance can be employed as the tread rubber 7, and a rubber that has superior absorbing performance can be employed as the sidewall rubber portions 8. Thus, the tyre 1 can improve steering stability during turning.

Outermost ends 9a in the tyre axial direction of the boundary surfaces 9 are located on an outer surface of the tyre and inwardly in the tyre radial direction of the respective tread edges Te. When such a tyre 1 turns at large camber angles, the tread rubber 7 always comes into contact with the ground and there is no risk that the sidewall rubber portions 8 come into contact with the ground. Hence, in the tyre 1, grip performance does not change suddenly since the sidewall rubber portions 8 do not come into contact with the ground during turning, and therefore steering stability performance can be improved.

Preferably, a distance L1 in the tyre radial direction between the outermost ends 9a of the pair of boundary surfaces 9 and the tread edges Te is equal to or less than 20 mm. When the distance L1 is 20 mm or less, the outermost ends 9a of the boundary surfaces 9 can be located on an outer surface of the tyre 1 with less distortion during turning, and thus durability performance of the tyre 1 can be improved. From this point of view, the distance L1 is more preferably 15 mm or less.

A height Ho in the tyre radial direction from a bead baseline BL to the outermost ends 9a of the pair of boundary surfaces 9 is preferably equal to or more than 60%, more preferably equal to or more than 70% of a height HS in the tyre radial direction from the bead baseline BL to the pair of tread edges Te. In such a tyre 1, the outermost ends 9a of the boundary surfaces 9 can be located on a region where less distortion occurs during turning of the outer surface of the tyre 1, and thus durability performance of the tyre 1 can be improved. Note that the bead baseline BL is an axial line that corresponds to a location of a rim diameter of the standard wheel rim on which the tyre 1 is to be mounted.

The height Ho of the outermost ends 9a of the boundary surfaces 9 is preferably equal to or less than 98%, more preferably equal to or less than 95% of the height HS of the tread edges Te. When such a tyre 1 turns at large camber angles, there is no risk that the sidewall rubber portions 8 come into contact with the ground, and therefore steering stability performance can be improved.

Innermost ends 9b in the tyre axial direction of the boundary surfaces 9 are located outwardly in the tyre radial direction of the outermost ends 9a of the boundary surfaces 9. In such a tyre 1, even if repeated load is applied near the boundary surfaces 9, the risk of cracking along the boundary surfaces 9 can be small, and thus durability can be improved.

Preferably, a distance L2 between the innermost end 9b and the outermost end 9a of each boundary surface 9 in the tyre radial direction is equal to or less than 30 mm. When the distance L2 is equal to or less than 30 mm, the outermost ends 9a of the boundary surfaces 9 can be located on a region where less distortion occurs during turning of the outer surface of the tyre 1, and thus durability performance of the tyre 1 can be improved. From this point of view, the distance L2 is more preferably equal to or less than 20 mm.

The innermost ends 9b in the tyre axial direction of the boundary surfaces 9 are located outwardly in the tyre axial direction of the tread edges Te. In such a tyre 1, even if repeated load is applied near the boundary surfaces 9, the risk of cracking along the boundary surfaces 9 can be small, and thus durability can be improved.

The height Hi in the tyre radial direction of the innermost ends 9b of the boundary surfaces 9 from the bead baseline BL is preferably equal to or more than 105%, more preferably equal to or more than 110% of the height HS of the tread edges Te. Such a tyre 1 can reduce the risk that crack occurs along the boundary surfaces 9, and thus durability of the tyre can be improved.

The height Hi of the innermost ends 9b of the boundary surfaces 9 is preferably equal to or less than 130%, more preferably equal to or less than 120% of the height HS of the tread edges Te. In such a tyre 1, the outermost ends 9a of the boundary surfaces 9 can be located on a region where less distortion occurs during turning of the outer surface of the tyre 1, and thus durability performance of the tyre 1 can be improved.

The boundary surfaces 9 are curved so as to be convex inwardly in the tyre radial direction. Since the ratio of the sidewall rubber portions 8 in the vicinity of the outer end portions 7a of the tread rubber 7 is small in such the boundary surfaces 9, it is possible to improve steering stability of the tyre 1 when turning at large camber angles.

The bias tyre 1, for example, may include a reinforcing layer 10 disposed outside in the tyre radial direction of the carcass 6 in the tread portion 2. The reinforcing layer 10 include one or more reinforcing plies 10A. One reinforcing ply 10A is employed. In this case, the innermost ends 9b of the boundary surfaces 9 are located on the reinforcing layer 10. Such a tyre 1 can suppress deformation during high-speed driving and improve high-speed durability performance.

Loss tangent tan δS of the sidewall rubber portions 8 at 70 degrees C is smaller than loss tangent tan 6T of the tread rubber 7 at 70 degrees C. Such sidewall rubber portions 8 have excellent absorption performance and can improve riding comfort of the tyre 1. As used herein, loss tangent tan δ at 70 degrees C is measured using a "viscoelastic spectrometer" in accordance with JIS-K6394 under the following condition:
measurement temperature: 70 degrees C,
initial distortion: 10%,
amplitude: plus/minus 1%,
frequency: 10Hz, and
deformation mode: tension.

The sidewall rubber portions 8 contain preferably 30 parts by mass or more, more preferably 40 parts by mass or more of natural rubber in 100 parts by mass of the rubber component thereof. Such sidewall rubber portions 8 can suppress the occurrence of cracks and improve durability performance of the tyre 1.

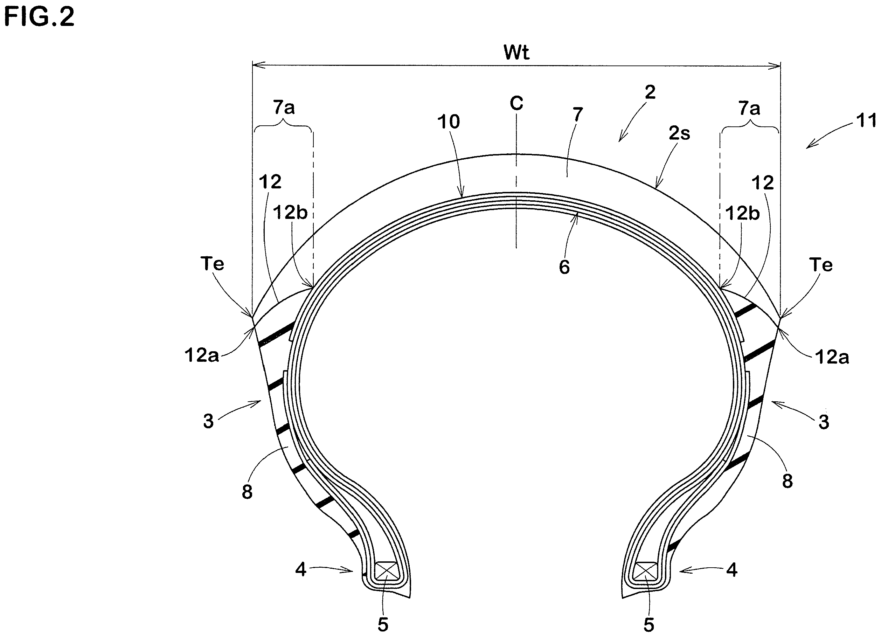

FIG. 2 is a tyre meridian cross-sectional view of a bias tyre 11 for two-wheel vehicle (hereinafter, simply referred to as "tyre 11") not covered by the present invention under the normal state according to the second embodiment. Note that elements having the same function as described above are denoted by the same reference numerals, and the description thereof may be omitted.

As illustrated in FIG. 2, the bias tyre 11 includes the tread portion 2, the pair of the sidewall portions 3 extending inwardly in the tyre radial direction from the both ends of the tread portion 2, and the pair of bead portions 4 provided inwardly in the tyre radial direction of the pair of sidewall portions 3. The pair of bead cores 5 is disposed in the pair of bead portions 4, for example. The tyre 11, the same as the above-mentioned tyre 1, preferably includes the carcass 6 having a bias structure and the reinforcing layer 10 disposed outside in the tyre radial direction of the carcass 6 in the tread portion 2.

The tyre 11 includes the tread rubber 7 forming the tread portion 2, and the pair of sidewall rubber portions 8 forming the pair of sidewall portions 3. The both end portions 7a of the tread rubber 7 are connected to the respective sidewall rubber portions 8 to form a pair of boundary surfaces 12 therebetween.

Outermost ends 12a in the tyre axial direction of the boundary surfaces 12 are located on an outer surface of the tyre and inwardly in the tyre radial direction of the respective tread edges Te. When such a tyre 1 turns at large camber angles, the tread rubber 7 always comes into contact with the ground and there is no risk that the sidewall rubber portions 8 come into contact with the ground. Hence, in the tyre 1, grip performance does not change suddenly since the sidewall rubber portions 8 do not come into contact with the ground during turning, and therefore steering stability performance can be improved.

Innermost ends 12b in the tyre axial direction of the boundary surfaces 12 are located outwardly in the tyre radial direction of the outermost ends 12a of the boundary surfaces 12. The innermost ends 12b of the boundary surfaces 12 are located outwardly in the tyre radial direction of the tread edges Te. In such a tyre 11, even if repeated load is applied near the boundary surfaces 12, the risk of cracking along the boundary surfaces 12 can be small, and thus durability can be improved.

The boundary surfaces 12 are curved so as to be convex outwardly in the tyre radial direction. Since the ratio of the sidewall rubber portions 8 in the vicinity of the outer end portions 7a of the tread rubber 7 is large in such the boundary surfaces 12, it is possible to improve steering stability of the tyre 11 when turning at large camber angles.

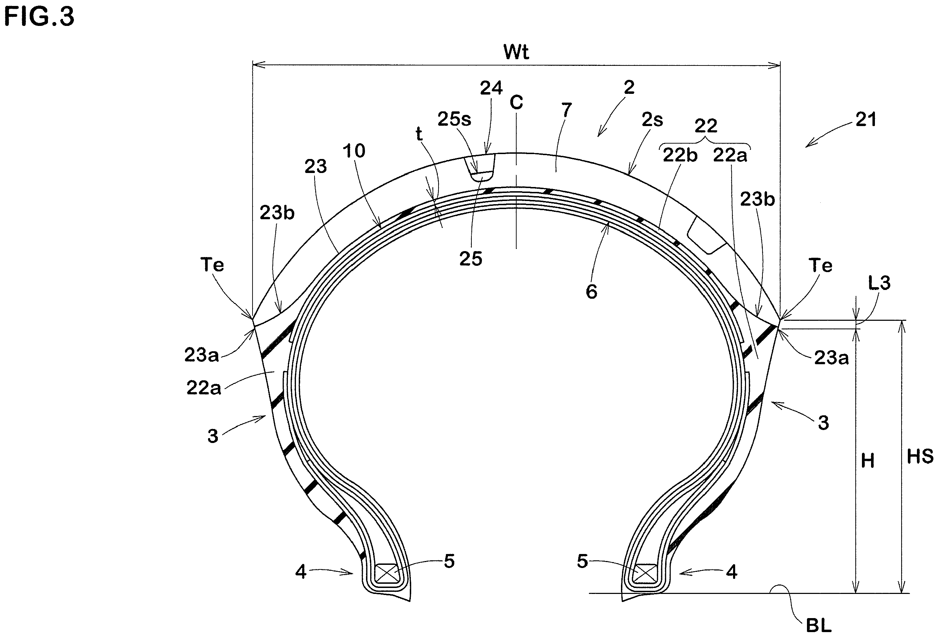

FIG. 3 is a tyre meridian cross-sectional view of a bias tyre 21 for two-wheel vehicle (hereinafter, simply referred to as "tyre 21") under the normal state according to an embodiment of the invention. Note that elements having the same function as described above are denoted by the same reference numerals, and the description thereof may be omitted.

As illustrated in FIG. 3, in the embodiment, the tyre 21 includes the tread portion 2, the pair of the sidewall portions 3 extending inwardly in the tyre radial direction from the both ends of the tread portion 2, and the pair of bead portions 4 provided inwardly in the tyre radial direction of the pair of sidewall portions 3. The pair of bead cores 5 is disposed in the pair of bead portions 4, for example. The tyre 21, the same as the above-mentioned tyre 1, preferably includes the carcass 6 having a bias structure and the reinforcing layer 10 disposed outside in the tyre radial direction of the carcass 6 in the tread portion 2.

In the embodiment, the tyre 21 includes the tread rubber 7 forming the tread surface 2s of the tread portion 2, and a toroidal rubber 22 disposed inwardly in the tyre radial direction of the tread rubber 7. In the embodiment, the toroidal rubber 22 includes the pair of sidewall rubber portions 22a forming an outer surface of the pair of sidewall portions 3 and a connecting rubber portion 22b extending inward of the tread rubber 7 and connecting the pair of sidewall rubber portions 22a with each other. In the embodiment, the tread rubber 7 is connected to the toroidal rubber to form a boundary surface 23 including a pair of axially outer boundary surfaces 23b. That is, the tread rubber 7 and the toroidal rubber 22 according to the embodiment are made of different rubbers with one another.

In such a tyre 21, a rubber that has superior grip performance can be employed as the tread rubber 7, and a rubber that has superior absorbing performance can be employed as the toroidal rubber 22 including the sidewall rubber portions 22a. Thus, the tyre 21 according to the embodiment can improve steering stability during turning.

In such a tyre 21, heat generation due to distortion of the tread rubber 7 during high-speed running is suppressed by the presence of connecting rubber portion 22b between the tread rubber 7 and the carcass 6, and durability performance during high-speed running can be improved. In addition, since energy loss of the tread portion 2 of the tyre 21 is reduced, rolling resistance can be reduced and fuel efficiency can be improved.

In the embodiment, outermost ends 23a in the tyre axial direction of the boundary surface 23 are located on an outer surface of the tyre and inwardly in the tyre radial direction of the respective tread edges Te. When such a tyre 21, the same as the above-mentioned tyre 1, turns at large camber angles, the tread rubber 7 always comes into contact with the ground and there is no risk that the sidewall rubber portions 22a come into contact with the ground. Hence, in the tyre 21 according to the embodiment, grip performance does not change suddenly since the sidewall rubber portions 22a do not come into contact with the ground during turning, and therefore steering stability performance can be improved.

Preferably, a distance L3 in the tyre radial direction between the outermost ends 23a of the boundary surface 23 and the tread edges Te is equal to or less than 20 mm. When the distance L3 is 20 mm or less, the outermost ends 23a of the boundary surface 23 can be located on an outer surface of the tyre 1 with less distortion during turning, and thus durability performance of the tyre 21 can be improved. From this point of view, the distance L3 is more preferably 15 mm or less.

A height H in the tyre radial direction from a bead baseline BL to the outermost ends 23a of the boundary surface 23 is preferably equal to or more than 60%, more preferably equal to or more than 70% of the height HS in the tyre radial direction from the bead baseline BL to the pair of tread edges Te. In such a tyre 21, the outermost ends 23a of the boundary surface 23 can be located on a region where less distortion occurs during turning of the outer surface of the tyre 21, and thus durability performance of the tyre 21 can be improved. Note that the bead baseline BL is an axial line that corresponds to a location of a rim diameter of the standard wheel rim on which the tyre 21 is to be mounted.

The height H of the outermost ends 23a of the boundary surface 23 is preferably equal to or less than 98%, more preferably equal to or less than 95% of the height HS of the tread edges Te. When such a tyre 21 turns at large camber angles, there is no risk that the sidewall rubber portions 22a come into contact with the ground, and therefore steering stability performance of the tyre 21 can be improved.

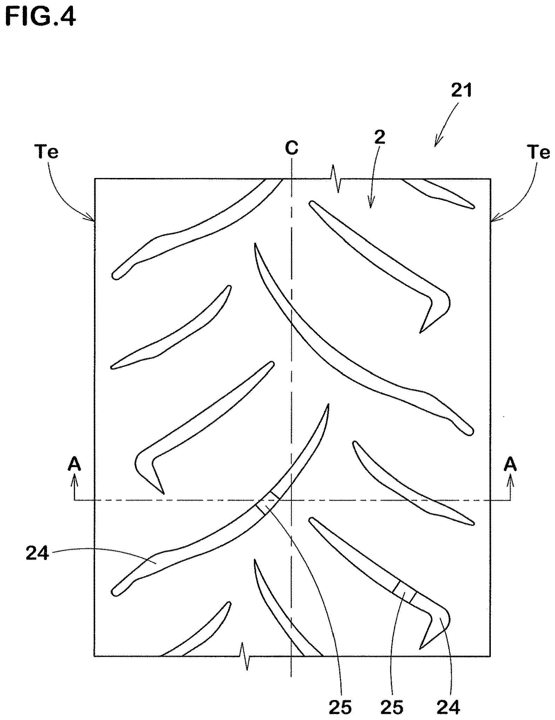

FIG. 4 is a development view of the tread portion 2 of the embodiment. FIG. 3 is a cross-sectional view taken along line A-A of FIG. 4. As illustrated in FIG. 3 and FIG. 4, in the embodiment of the invention, the tread portion 2 is provided with a plurality of grooves 24. The pattern and/or shape of the grooves 24 is not limited to those shown in FIG. 4 but can include one or more circumferential grooves extending continuously in the tyre circumferential direction, for example.

Some of the grooves 24 have a plurality of slip signs 25 for indicating wear condition of the tread portion 2. Here, the slip signs 25 are portions protruding outward in the tyre radial direction from the groove bottoms of the grooves 24. When the tread portion 2 is worn and one or more slip signs 25 are exposed on the tread surface 2s, users can know that it is time to replace the tyre.

As illustrated in FIG. 3, in the embodiment, the connecting rubber portion 22b is located inwardly in the tyre radial direction of an outer surface 25s of the slip sign 25 that is located nearest to the tyre equator C. Such a connecting rubber portion 22b is unlikely to be exposed to the tread surface 2s even if the area around the tyre equator C wears to the slip sign 25. Thus, in the tyre 21 of the embodiment, grip performance does not change suddenly since the connecting rubber portion 22b do not come into contact with the ground even when the wear progresses. Therefore, steering stability of the tyre can be improved.

A thickness t of the connecting rubber portion 22b is preferably equal to or more than 0.5 mm, more preferably equal to or more than 0.8 mm. The thickness t of the connecting rubber portion 22b is equal to or less than 2.0 mm, preferably equal to or less than 1.8 mm. Such a connecting rubber portion 22b is suitable for suppressing heat generation due to distortion of the tread rubber 7 at high-speed driving.

In the embodiment, the axially outer boundary surfaces 23b are curved so as to be convex inwardly in the tyre radial direction. Since the ratio of the sidewall rubber portions 22a in the vicinity of the outer boundary surfaces 23b is small in such the boundary surfaces 23b, it is possible to improve steering stability of the tyre 1 when turning at large camber angles.

In the embodiment, loss tangent tan δS of the sidewall rubber portions 22a and the connecting rubber portion 22b at 70 degrees C is smaller than loss tangent tan 6T of the tread rubber 7 at 70 degrees C, same as the above-mentioned sidewall rubber portions 8. Such sidewall rubber portions 22a have excellent absorption performance and can improve riding comfort of the tyre 1.

The sidewall rubber portions 22a and the connecting rubber portion 22b contain preferably 30 parts by mass or more, more preferably 40 parts by mass or more of natural rubber in 100 parts by mass of the rubber component. Such rubbers 22a and 22b can suppress the occurrence of cracks and improve durability performance of the tyre 21. In one aspect, the sidewall rubber portions 22a and the connecting rubber portion 22b may be formed integrally previously with one another. In another aspect, the sidewall rubber portions 22a and the connecting rubber portion 22b may be prepared separately and then be joined with one another to form the toroidal rubber 22.

Although a particularly preferred embodiment of the present invention has been described in detail, the present invention may be modified to various aspects without being limited to the illustrated embodiment within the scope of the claims.

### [Example]

### [Example 1]

With the first example not covered by the present invention, bias tyres for two-wheel vehicle having a structure shown in FIG. 1 and FIG. 2 were prototyped based on the specification of Table 1. Further, as a comparative example, a bias tyre for two-wheel vehicle in which the tread rubber and the sidewall rubber portions are formed integrally was prototyped. Then, using these prototype tyres, steering stability, ride comfort and durability were tested. The common specifications and test methods for each prototype tyre are as follows.

Common specification:
Tyre size: 130/70-13M/C
Rim size: 13x3.50MT
Inner pressure: 225 kPa

### Steering stability test:

A test rider drove a medium-sized scooter with each prototype tyre mounted on the rear wheel on a test course, and evaluated steering stability during turning in view of grip performance, feeling of ground contact, and the transient characteristics when turning by the rider's feeling. The test results are shown in Table 1 using an index with the comparative example as 100, wherein the larger the value, the better the steering stability.

### Ride comfort test:

A test rider drove the medium-sized scooter with each prototype tyre mounted on the rear wheel on a test course, and evaluated ride comfort by the rider's feeling. The test results are shown in Table 1 using an index with the comparative example as 100, wherein the larger the value, the better the ride comfort.

### Durability test:

The prototype tyres were put into an ozone chamber having a concentration of 50 pphm for 3 weeks to be subjected to ozone deterioration treatment. Then, these tyres were made to run 10,000 km on a drum tester under a load of 3.29 kN. After that, durability performance of each tyre was evaluated based on the crack occurrence rate of the sidewall portions. The test results are shown in Table 1 using an index with the comparative example as 100, wherein the larger the value, the better the durability.

Table 1 shows the test results.

**[Table 1]**

| | Ref. | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Ratio Ho/HS of height Ho of outermost ends of boundary surfaces to height HS of tread edges (%) | - | 95 | 70 | 55 | 95 | 95 | 95 | 95 | 95 |
| Ratio Hi/HS of height Hi of innermost ends of boundary surfaces to height HS of tread edges (%) | - | 110 | 100 | 80 | 120 | 110 | 110 | 110 | 110 |
| Orientation of boundary surfaces | - | convex inward | convex inward | convex inward | convex inward | convex outward | convex inward | convex inward | convex inward |
| Loss tangent tan δT of tread rubber | 0.3 | 0.3 | 0.3 | 0.3 | 0.3 | 0.3 | 0.3 | 0.3 | 0.3 |
| Loss tangent tan δS of sidewall rubber portions | 0.3 | 0.15 | 0.15 | 0.15 | 0.15 | 0.15 | 0.23 | 0.15 | 0.15 |
| Ratio of natural rubber in 100 parts by mass of sidewall rubber (parts by mass) | 40 | 40 | 40 | 40 | 40 | 40 | 40 | 30 | 20 |
| Steering stability (index) | 100 | 115 | 120 | 105 | 105 | 105 | 110 | 115 | 115 |
| Ride comfort (index) | 100 | 115 | 110 | 110 | 110 | 110 | 105 | 115 | 115 |
| Durability (index) | 100 | 120 | 120 | 90 | 120 | 120 | 120 | 110 | 100 |

### [Example 2]

Next, with the second example, bias tyres for two-wheel vehicle having a structure shown in FIG. 3 were prototyped based on the specification of Table 2. Further, as a comparative example, a bias tyre for two-wheel vehicle in which the tread rubber and the sidewall rubber portions are formed integrally was prototyped same as the first example. Then, using these prototype tyres, high-speed durability, steering stability, ride comfort and durability were tested. The common specifications and test methods for each prototype tyre are as follows.

Common specification:
Tyre size: 130/70-13M/C
Rim size: 13x3.50MT
Inner pressure: 225 kPa

### High-speed durability test:

Each prototype tyre was made to run on a drum tester at a speed of 81 km/h for two hours under a load of 1.99 kN. After that, the tyre was cooled to room temperature, and then the running speed was gradually increased every 30 minutes. Then, the running time until the tyre was damaged was measured. The test results are shown in Table 2 using an index with the comparative example as 100, wherein the larger the value, the better the high-speed durability.

### Steering stability test:

The test was conducted in the same way as the first example. The test results are shown in Table 2 using an index with the comparative example as 100, wherein the larger the value, the better the steering stability.

### Ride comfort test:

The test was conducted in the same way as the first example. The test results are shown in Table 2 using an index with the comparative example as 100, wherein the larger the value, the better the ride comfort.

### Durability test:

The test was conducted in the same way as the first example. The test results are shown in Table 2 using an index with the comparative example as 100, wherein the larger the value, the better the durability.

Table 2 shows the test results.

**[Table 2]**

| | Ref. | Ex. 9 | Ex. 10 | Ex. 11 | Ex. 12 | Ex. 13 | Ex. 14 | Ex. 15 |
|---|---|---|---|---|---|---|---|---|
| Ratio Ho/HS of height Ho of outermost ends of boundary surfaces to height HS of tread edges (%) | - | 95 | 70 | 55 | 95 | 95 | 95 | 95 |
| Thickness t of connecting rubber portion (mm) | - | 2 | 2 | 2 | 0.8 | 2 | 2 | 2 |
| Loss tangent tan δT of tread rubber | 0.3 | 0.3 | 0.3 | 0.3 | 0.3 | 0.3 | 0.3 | 0.3 |
| Loss tangent tan δS of sidewall rubber portions | 0.3 | 0.15 | 0.15 | 0.15 | 0.15 | 0.23 | 0.15 | 0.15 |
| Ratio of natural rubber in 100 parts by mass of sidewall rubber (parts by mass) | 40 | 40 | 40 | 40 | 40 | 40 | 30 | 20 |
| High-speed durability (index) | 100 | 120 | 120 | 120 | 105 | 110 | 120 | 120 |
| Steering stability (index) | 100 | 115 | 120 | 105 | 110 | 105 | 115 | 115 |
| Ride comfort (index) | 100 | 115 | 110 | 110 | 105 | 105 | 115 | 115 |
| Durability (index) | 100 | 120 | 120 | 90 | 120 | 120 | 110 | 100 |

From the test results, it was confirmed that the example bias tyres for the two-wheeled vehicle were superior in steering stability performance as compared with the comparative example tyre. In addition, the tyres of the examples were better than the comparative examples in terms of the overall performance evaluated by the total of each performance. Thus, it was confirmed that steering stability during turning of Example's motorcycle bias tyres were improved.

## Claims

1. A bias tyre (21) for two-wheel vehicle comprising:
a tread portion (2) defining a pair of tread edges (Te);
a pair of sidewall portions (3);
a carcass (6) having a bias structure;
a pair of sidewall rubber portions (22a) forming an outer surface of the pair of sidewall portion (3); and
a tread rubber (7) forming an outer surface of the tread portion (2) and connected to the pair of sidewall rubber portions (22a) to form a pair of boundary surfaces (23b) therebetween; wherein
outermost ends (23a) in a tyre axial direction of the pair of boundary surfaces (23b) are located on an outer surface of the tyre and inwardly in a tyre radial direction of the respective tread edges (Te),
**characterized by** a connecting rubber portion (22b) disposed inward of the tread portion (2), connecting the pair of sidewall rubber portions (22a) with each other and having a thickness (t) equal to or less than 2.0 mm.

2. The bias tyre (21) for two-wheel vehicle according to claim 1, wherein
a distance (L3) in the tyre radial direction between the axially outermost ends (23a) of the pair of boundary surfaces (23b) and the tread edges (Te) is equal to or less than 20 mm.

3. The bias tyre (21) for two-wheel vehicle according to claim 1 or 2, wherein
a height (H) in the tyre radial direction from a bead baseline (BL) to the outermost ends (23a) of the pair of boundary surfaces (23b) is equal to or more than 60% of a height (HS) in the tyre radial direction from the bead baseline (BL) to the pair of tread edges (Te).

4. The bias tyre (21) for two-wheel vehicle according to any one of claims 1 to 3, wherein
loss tangent tan δS of the pair of sidewall rubber portions (22a) is smaller than loss tangent tan δT of the tread rubber (7), each loss tangent tan δ being measured in accordance with JIS-K6394 under a measurement temperature of 70 degrees C, an initial distortion of 10 %, an amplitude of plus/minus 1 %, a frequency of 10 Hz, and a tension deformation mode.

5. The bias tyre (21) for two-wheel vehicle according to any one of claims 1 to 4, wherein
the sidewall rubber portions (22a) contain 30 parts by mass or more of natural rubber in 100 parts by mass of a rubber component of the sidewall rubber portions (22a).

6. The bias tyre (21) for two-wheel vehicle according to any of claims 1 to 5, wherein
the tread portion (2) is provided with a plurality of grooves (24) having a plurality of slip signs (25) for indicating wear condition of the tread portion (2), and
the connecting rubber portion (22b) is located inwardly in the tyre radial direction of an outer surface (25s) of the slip sign (25) that is located nearest to a tyre equator (C).

7. The bias tyre (21) for two-wheel vehicle according to any of claims 1 to 6, wherein
the boundary surfaces (23b) are curved so as to be convex inwardly in the tyre radial direction.

## Patentansprüche

1. Diagonalreifen (21) für ein zweirädriges Fahrzeug, umfassend:
einen Laufflächenabschnitt (2), der ein Paar Laufflächenkanten (Te) definiert;
ein Paar Seitenwandabschnitte (3);
eine Karkasse (6) mit einer Diagonalstruktur, und;
ein Paar Seitenwandgummiabschnitte (22a), die eine Außenfläche des Paares Seitenwandabschnitte (3) bilden; und
einen Laufflächengummi (7), der eine Außenfläche des Laufflächenabschnitts (2) bildet und mit dem Paar Seitenwandgummiabschnitten (22a) verbunden ist, so dass ein Paar Grenzflächen (23b) dazwischen gebildet ist; wobei
äußerste Enden (23a) des Paares Grenzflächen (23b) in einer Reifenaxialrichtung auf einer Außenfläche des Reifens und in einer Reifenradialrichtung innen von der jeweiligen Laufflächenkante (Te) angeordnet sind,
**gekennzeichnet durch** einen Verbindungsgummiabschnitt (22b), der innen von dem Laufflächenabschnitt (2) angeordnet ist und das Paar Seitenwandgummiabschnitte (22a) miteinander verbindet und eine Dicke (t) von gleich oder weniger als 2,0 mm aufweist.

2. Diagonalreifen (21) für ein zweirädriges Fahrzeug nach Anspruch 1, wobei ein Abstand (L3) in der Reifenradialrichtung zwischen den axial äußersten Enden (23a) des Paares Grenzflächen (23b) und den Laufflächenkanten (Te) gleich oder kleiner als 20 mm ist.

3. Diagonalreifen (21) für ein zweirädriges Fahrzeug nach Anspruch 1 oder 2, wobei eine Höhe (H) in der Reifenradialrichtung von einer Wulstgrundlinie (BL) zu den äußersten Enden (23a) des Paares Grenzflächen (23b) gleich oder mehr als 60% einer Höhe (HS) in der Reifenradialrichtung von der Wulstgrundlinie (BL) zu dem Paar Laufflächenkanten (Te) ist.

4. Diagonalreifen (21) für ein zweirädriges Fahrzeug nach einem der Ansprüche 1 bis 3, wobei der Verlusttangens tan δS des Paares Seitenwandgummiabschnitte (22a) kleiner ist als der Verlusttangens tan δT des Laufflächengummis (7), wobei jeder Verlusttangens tan δ gemäß JIS-K6394 unter einer Messtemperatur von 70 Grad C, einer anfänglichen Verzerrung von 10 %, einer Amplitude von plus/minus 1 %, einer Frequenz von 10 Hz und einem Zugverformungsmodus gemessen ist.

5. Diagonalreifen (21) für ein zweirädriges Fahrzeug nach einem der Ansprüche 1 bis 4, wobei die Seitenwandgummiabschnitte (22a) 30 Masseteile oder mehr Naturkautschuk in 100 Masseteilen einer Kautschukkomponente der Seitenwandgummiabschnitte (22a) enthalten.

6. Diagonalreifen (21) für ein zweirädriges Fahrzeug nach einem der Ansprüche 1 bis 5, wobei
der Laufflächenabschnitt (2) mit einer Vielzahl von Rillen (24) versehen ist, die eine Vielzahl von Gleitanzeigen (25) zur Anzeige des Abnutzungszustands des Laufflächenabschnitts (2) aufweisen, und
der Verbindungsgummiabschnitt (22b) in der Reifenradialrichtung innen von einer Außenfläche (25s) der Gleitanzeige (25) angeordnet ist, die einem Reifenäquator (C) am nächsten liegt.

7. Diagonalreifen (21) für ein zweirädriges Fahrzeug nach einem der Ansprüche 1 bis 6, wobei die Grenzflächen (23b) so gekrümmt sind, dass sie in der Reifenradialrichtung nach innen konvex sind.

## Revendications

1. Pneumatique diagonal (21) pour véhicule à deux roues, comprenant :
une portion formant bande de roulement (2) définissant une paire de bords de bande de roulement (Te) ;
une paire de portions formant parois latérales (3) ;
une carcasse (6) ayant une structure diagonale ;
une paire de portions en caoutchouc de parois latérales (22a) formant une surface extérieure de la paire de portions formant parois latérales (3) ; et
un caoutchouc de bande de roulement (7) formant une surface extérieure de la portion formant bande de roulement (2) et connecté à la paire de portions de caoutchouc de parois latérales (22a) pour former une paire de surfaces frontières (23b) entre celles-ci ; dans lequel
des extrémités les plus à l'extérieur (23a) dans une direction axiale du pneumatique de la paire de surfaces frontières (23b) sont situées sur une surface extérieure du pneumatique et à l'intérieur dans une direction radiale du pneumatique des bords de bande de roulement (Te) respectifs,
**caractérisé par** une portion de caoutchouc de connexion (22b) disposée à l'intérieur de la portion formant bande de roulement (2), connectant la paire de portions en caoutchouc de parois latérales (22a) l'une à l'autre et ayant une épaisseur (t) égale ou inférieure à 2,0 mm.

2. Pneumatique diagonal (21) pour véhicule à deux roues selon la revendication 1, dans lequel
une distance (L3) dans la direction radiale du pneumatique entre les extrémités axialement les plus à l'extérieur (23a) de la paire de surfaces frontières (23b) et les bords de bande de roulement (Te) est égale ou inférieure à 20 mm.

3. Pneumatique diagonal (21) pour véhicule à deux roues selon la revendication 1 ou 2, dans lequel
une hauteur (H) dans la direction radiale du pneumatique depuis une ligne de base de talon (BL) jusqu'aux extrémités les plus à l'extérieur (23a) de la paire de surfaces frontières (23b) est égale ou supérieure à 60 % d'une hauteur (HS) dans la direction radiale du pneumatique depuis la ligne de base de talon (BL) jusqu'à la paire de bords de bande de roulement (Te).

4. Pneumatique diagonal (21) pour véhicule à deux roues selon l'une quelconque des revendications 1 à 3, dans lequel
une tangente de perte tan δS de la paire de portions de caoutchouc de parois latérales (22a) est plus petite qu'une tangente de perte δT du caoutchouc de bande de roulement (7), chaque tangente de perte tan δ étant mesurée en accord avec la norme industrielle japonaise JIS-K6394 à une température de mesurage de 70 degrés C, une distorsion initiale de 10 %, une amplitude de plus/moins 1 %, une fréquence de 10 Hz, et un mode de déformation en traction.

5. Pneumatique diagonal (21) pour véhicule à deux roues selon l'une quelconque des revendications 1 à 4, dans lequel
les portions en caoutchouc de parois latérales (22a) contiennent 30 parts en masse ou plus de caoutchouc naturel dans 100 parts en masse d'un composant de caoutchouc des portions en caoutchouc de parois latérales (22a).

6. Pneumatique diagonal (21) pour véhicule à deux roues selon l'une quelconque des revendications 1 à 5, dans lequel
la portion formant bande de roulement (2) est dotée d'une pluralité de rainures (24) ayant une pluralité de repères de glissement (25) pour indiquer une condition d'usure de la portion formant bande de roulement (2), et
la portion en caoutchouc de connexion (22b) est située à l'intérieur dans la direction radiale du pneumatique d'une surface extérieure (25s) du repère de glissement (25) qui es situé le plus près d'un équateur de pneumatique (C).

7. Pneumatique diagonal (21) pour véhicule à deux roues selon l'une quelconque des revendications 1 à 6, dans lequel
les surfaces frontières (23b) sont incurvées de manière à être convexes vers l'intérieur dans la direction radiale du pneumatique.
